# EUROPEAN PATENT APPLICATION

(11) **EP 4 742 271 A1**
(43) Date of publication of application: **13.05.2026**
(21) Application number: 25275097.1
(22) Date of filing: 06.10.2025
(51) Int. Cl.: G21B 1/17, F16J 15/00, G21B 1/05, G21B 1/13

(54) **MODULAR VESSEL ASSEMBLY**

(71) Applicant: UK Fusion Energy Ltd, Abingdon, Oxfordshire OX14 3DB (GB)
(72) Inventor: VERHOEVEN, Roel, Abingdon, OX14 3DB (GB)
(74) Representative: HGF

(57) **Abstract**

A modular vessel assembly defining an internal chamber suitable to maintain a vacuum within the chamber to support a magnetically confined plasma. The present modular assembly is formed from a plurality of annular modular sections arranged in abutting contact as a stack of annular rings extending around a central axis of the chamber. A sealing arrangement is provided at the interface between the modules of the stack to create a fluid seal configured to maintain at least a partial vacuum within the chamber. The present modular vessel assembly is suitable for use as a confinement vessel within a fusion reactor such as a tokamak.

## Description

### Field of invention

The present invention relates to a modular vessel assembly defining an internal chamber, and in particular although not exclusively, to a vessel assembly and chamber configured to confine a plasma suitable to support a fusion reaction.

### Background

Fusion power is the subject of extensive research and development due to its potential to provide clean, safe and cost-efficient electricity via abundant sources of the necessary hydrogen isotope fuel (such as sea water, which contains deuterium). A fusion reactor is adapted to harvest energy released from the fusion of isotopes of hydrogen that are collided together to form heavier nuclei and release large amounts of energy in the process. The heat from such reactions may be used to generate electricity using steam turbines and the like.

The fusion reaction is typically undertaken and controlled within a reactor device, such as a tokamak, that is adapted to create specifically orientated magnetic fields that confine and control the plasma within the reactor internal chamber of the high structural integrity vessel. Such vessels are designed to maintain an internal vacuum and be compatible for use with the powerful magnetic fields generated by the external confinement magnets and a central solenoid that drives circulation of the plasma within the chamber (whilst also facilitating start-up and shutdown of the plasma). These vacuum vessels are typically manufactured from panels of stainless steel that are welded together to form a unitary vessel having a toroidal shape configuration.

Plasma within the fusion reaction is formed from a super-heated gas and is a collection of positively charged ions and negatively charged electrons. The plasma is an electrically conductive fluid that is responsive to electric and magnetic fields within which the fusion reaction occurs between the atomic isotopes.

The walls of a plasma confining vessel are adapted to withstand significant thermal load, magnetic distortions, electromagnetic forces and energetic particle bombardment. The extreme operating conditions of confinement vessels such as those used in tokamaks, require regular maintenance to avoid operational failures. As will be appreciated, maintenance is complicated by the high radiation environment created by the deuterium/tritium fusion reaction phase of operation. Additionally, due to the unpredictable behaviour of the plasma and the fine tolerances for achieving energy efficient fusion reactions, device shutdown and reaction process restarts are to be minimised.

Accordingly, there remains a need for improvements to vacuum vessels and specifically vessels suitable to confine a plasma.

### Summary of the invention

It is an objective of the present invention to provide a vacuum vessel suitable for use to confine highly energetic plasma and in particular, a plasma configured as a fluid medium to enable and support a fusion reaction.

It is a further specific objective to provide a vacuum vessel that may be serviced and maintained including repair and maintenance of the structural integrity of the vessel and associated sub-modules including all regions of the vessel including radially inner and radially outer wall sections.

The objectives are achieved via a modular vessel assembly according to the present concept that comprises an internal chamber in which individual modules of the vessel assembly are separate annular segments divided in planes aligned perpendicular to a longitudinal axis of the vessel. Such modules or segments may be stacked together axially as a unitary structure and sealed via a plurality of sealing devices provided at the respective interfaces between the modules. Such a modular construction greatly facilitates inspection, servicing, maintenance and repair of both the vessel and other functional components, assemblies, devices and mechanisms associated and forming part of a plasma confinement device such as a tokamak, stellarators and the like. Specifically, the present modules and components may be removed, repaired, serviced and/or replaced with fewer disconnection and reconnection steps relative to existing vessels.

The modules of the present vessel assembly and respective sealing devices comprise a generally annular configuration to be consistent/compatible with the toroidal shaped reaction chamber. That is and preferably, the modules of the present vessel assembly have a configuration being a torus, in particular a ring torus, often referred to as a doughnut in which the chamber extends in a circumferential direction around a central core or region. The present vessel is formed from annular modules that may be considered to comprises ring-like shape configurations that are stackable vertically on top of one another in axial abutment contact. The present sealing devices are similarly annular and extend the full 360° circumferential length at the axial interface between the modules so as to couple the modules as a unitary structure via respective fluid seals. Accordingly, the present concept, as described herein, is adapted to create and maintain a fluid seal between each of the modules to sustain a vacuum (and a plasma) within the internal chamber.

Reference herein to a *'module'* encompasses a vessel section that is annular or otherwise comprises at least a structural portion extending in a circumferential direction around a central longitudinal axis of the vessel and/or the internal chamber. Such a term encompasses a vessel wall section, part, piece or component that may be arranged as a vertical stack to at least in part define a vessel chamber wall.

According to a first aspect of the present concept there is provided modular vessel assembly comprising: a stack of annular modules stacked along a longitudinal axis of the assembly so as to at least partially define an internal vacuum chamber; and a sealing arrangement configured to create a fluid seal between the annular modules for maintaining at least a partial vacuum within the internal vacuum chamber, wherein each annular module comprises a structural portion configured to support a structural load transmitted axially through the stack.

Preferably, each annular module comprises an annular abutment portion in contact with a respective adjacent annular abutment portion of an axially neighbouring annular module of the stack, wherein the structural portions of the modules are configured to transmit the structural load between the respective abutment portions of the modules. Optionally, the abutment portions of at least one pair of axially neighbouring modules comprise a first annular extension provided on one of the pair of modules, and a second annular extension provided on the other of the pair of modules, wherein the first and second annular extensions are radially offset relative to each other so as to axially overlap; optionally, wherein at least one of the first and second annular extensions comprises one or a combination of: an annular step; an annular flange; an annular ridge; and at least one castellation, e.g. wherein the first annular extension comprises an annular step and the second annular extension comprises an annular flange positioned radially inboard of an axially extending wall portion of the annular step of the first annular extension such that the respective annular flange and the annular wall portion of axially neighbouring modules of the stack axially overlap. Optionally, at least a portion of each abutment surface of the modules are aligned to extend in a horizontal plane and/or are aligned horizontally. Optionally, at least a portion of each abutment surface of the modules are aligned to extend in a perpendicular or substantially perpendicular to a longitudinal axis of the vessel and/or the internal chamber.

The present vessel assembly is configured such that the vessel modules (segments) include a vacuum boundary function and a structural function. Advantageously, each module via the assembly and sealing configuration, is capable of being vertically removed and transported to a maintenance facility where aspects or features of the modules may be repaired, serviced and/or replaced. The modular architecture provides for quicker maintenance turnaround times and also improves access to all regions of the vessel seal components. The present concept facilitates maintenance at a dedicated facility or stations and removes servicing and repair tasks from the in-use location of the vacuum device. This is particularly beneficial where the present vessel assembly and sealing device form part of a fusion reactor such as a tokamak. Advantageously, the present modular vessel being formed as annular sections/modules that are stackable vertically via fluid sealing engagement provides an architecture that is self-supporting and adapted to maintain a vacuum boundary by the respective mass/weight of each module that, in turn, is transmitted through the respective sealing devices to create and maintain the vacuum seal of the entire assembly.

Preferably, the sealing arrangement comprises one or more sealing devices mounted respectively to the modules and configured to extend between axially neighbouring modules of the stack. Preferably, each sealing device is mounted at the structural portion of a respective one of the modules and is configured to contact the structural portion of a respective axially neighbouring module of the stack, optionally, wherein each sealing device comprises: a biasing member having a first end region sealingly connected to the module to which the sealing device is mounted and a second end region; and a sealing shoe sealingly connected at the second end region of the biasing member; wherein the sealing shoe is provided in sealing engagement with the respective axially neighbouring module of the stack, the biasing member configured to apply a biasing force to the sealing shoe to bias the sealing shoe into contact to provide a fluid seal between the modules of the stack

Preferably, each sealing device is configured to seal an interface between the annular modules and comprises: an annular biasing member having a first annular axial end region connectable to a first module and a second annular axial end region; an annular sealing shoe provided at the second axial end region of the biasing member, the biasing member configured to apply an axial biasing force to the sealing shoe; the first end region of the biasing member configured to sealingly engage the first module and the sealing shoe configured to sealingly engage the second module via the axial biasing force to create an annular fluid seal between the first and the second modules. Optionally, the biasing member may comprise a resiliently deformable member. Optionally, the sealing shoe comprises: a shoe housing defining an annular cavity, wherein the shoe housing is configured to be biased axially towards engagement with the second module by the biasing force; and at least one load seal housed within the cavity and configured for biased sealing engagement with an annular surface of the second module via the biasing force. Optionally, the load seal comprises a resiliently deformable annular gasket mounted within shoe housing. Optionally, the sealing device comprises an annular retainer boss mounted within the shoe housing, the resiliently deformable gasket mounted at the retainer boss and configured for resilient compression within the shoe housing to provide the biased sealing engagement with the surface of the second module via the biasing force. Optionally, the resiliently deformable annular gasket comprises a C-shaped cross section. Optionally, the assembly further comprises to a fluid evacuation device to create at least a partial vacuum at the annular cavity of the shoe housing.

Preferably, the sealing arrangement is separate and/or different to the structural portion and comprises a plurality of sealing devices mounted respectively to the modules and configured to extend between axially neighbouring modules of the stack. This is advantageous such that the structural portion is adapted to complement the sealing arrangement and maintain the seal integrity. Preferably, each sealing device is mounted at the structural portion of each module and configured to contact the structural portion of a respective axially neighbouring module of the stack. Optionally, each sealing device comprises: a biasing member having a first end region sealingly connected to the module and a second end region; a sealing shoe sealingly connected at the second end region of the biassing member; wherein the sealing shoe is provided in sealing engagement with a respective axially neighbouring module of the stack, the biasing member configured to apply a biassing force to the sealing shoe to bias the sealing shoe into contact to provide a fluid seal between the modules of the stack. According to aspects of the present concept, the biasing member is forced into resilient compression by the axial loading forces created by the weight/mass of the individual modules of the vessel assembly. The loading force is transmitted through the sealing shoe to provide a strong and reliable fluid seal between the modules of the stack.

Optionally, the first and second abutment portions comprise at least one annular extension projecting axially at each module, a first annular extension provided at a first radial position and a second annular extension provided at a second radial position being different to the first radial position such that the first and second annular extensions of each module are radially off-set, wherein respective opposite first and second annular extensions of respective axially neighbouring modules are configured to overlap axially at the stack. Preferably, the first/or second annular extension comprises any one or a combination of: an annular step; an annular flange; an annular ridge; at least one castellation. Such an arrangement is advantageous to facilitate alignment of the modules for initial installation or during reassembly following servicing and repair of individual modules of the stack. In particular, the first and/or second annular extensions formed as flanges, steps, ridges and the like are configured to abut one another as the modules are brought into axial abutment. Additionally, such annular axial extensions provide a non-linear interface between the modules in a radial direction from the axial centre. This is advantageous for confinement to minimise transmission of the highly energetic particles, species and in particular neutrons through the vessel walls. Such annular extensions projecting axially at each module (as formed by an annular step, flange, ridge, rib, shoulder, etc) are advantageous to inhibit/prevent over compression of the sealing device (optionally the biasing member) at the abutment regions/surfaces of the modules.

Optionally, the annular extension of the first abutment portion comprises an annular step and the annular extension of the second abutment portion comprises an annular flange positioned radially inside an axially extending wall portion of the annular step of the first abutment portion such that the respective annular flange and the annular wall portion of axially neighbouring modules of the stack are configured to overlap axially.

Optionally, the sealing arrangement is mounted at the first abutment portion and is positioned radially inside the flange wherein the sealing shoe is configured to contact a base portion of the annular step of an axially neighbouring module of the stack radially inside the annular wall portion of the axially neighbouring module.

Optionally, the base portion of the annular step comprises an axially extending annular lip defining an annular recess at the abutment portion, at least a part of the seal shoe and/or an axial tip of the annular extension received within the recess.

Optionally, the annular extensions of at least one pair of axially neighbouring modules comprise corresponding chamfered surfaces aligned oblique to the longitudinal axis and arranged so as to contact one another to aid alignment of the modules as they are assembled axially to form the stack. Preferably, the first and second abutment portions each comprise a respective first and second chamfered surface aligned oblique to the axis and wherein the first and second chamfered surface of axially neighbouring modules of the stack are positioned radially proximate and/or opposite each other. The respective chamfered surfaces of the modules are beneficial to provide alignment guidance as the modules are stacked together axially. In particular, the modules and present vessel assembly and sealing devices are arranged such that the chamfered surfaces of respective axially neighbouring modules are configured to abut one another so as to slide in mating contact and guide appropriate radial alignment of the modules into fully engaged abutment contact.

Preferably, the assembly further comprises a locking mechanism configured to lock axially the modules at the stack and/or to selectively lock axially neighbouring pairs of annular modules of the stack together. Optionally, the locking mechanism comprises a first part provided at one module of the pair of modules, and a second part provided at the other module of the pair of modules, the first and second parts configured for releasable engagement with each other to provide the axial lock; optionally, wherein the first and second parts comprise respective first and second recesses and the locking mechanism further comprises an annular toothed ring mounted at least partially within a cavity defined by the first and second recesses, the toothed ring capable of rotation in a circumferential direction around the longitudinal axis within the cavity; optionally, wherein the assembly further comprises a drive mechanism coupled to the toothed ring to provide rotational drive to the ring.

Optionally, the locking mechanism may comprise a first part provided at the first abutment portion and a second part provided at the second abutment portion, the first and second parts configured for releasable engagement with each other to provide the axial lock. Optionally, the first and second parts comprise respective first and second recesses and the locking mechanism further comprises an annular toothed ring mounted at least partially within a cavity defined by the first and second recesses, the toothed ring capable of rotation in a circumferential direction around the axis within the cavity. At least one of the first and second recesses is axially enlarged relative to an axial length, width or depth of locking ring. This is advantageous to provide a degree of at least axial positional play/freedom as the modules are mated and/or axially locked together.

Optionally, the assembly further comprises a drive mechanism coupled to the toothed ring to provide rotational drive to the ring. The drive mechanism may comprise a motor, actuator (including rotational and/or linear actuator), a mechanical drive, an electro-mechanical drive and/or a magnetic drive device. Preferably, the drive mechanism is a non-magnetic assembly or mechanism. Such an arrangement may comprise a fluid piston and/or cylinder drive, such as a hydraulic actuator. These non-magnetic arrangements are advantageous to avoid creating any auxiliary magnetic flux that may otherwise be deleterious to the main plasma controlling magnetic field. Such a drive mechanism may be positioned locally or remotely to the assembly with operational drive of the coupling mechanism being direct or indirect. According to the present concept, the axial lock is a restraint configured as boltless locking device. As noted, this functionality may be provided by a toothed ring adapted to rotate over a small angle about the central axis of the vessel/chamber. Rotation one way locks the stacked modules together and rotation the other way releases them. The present interface configuration also prevents over-compression of the seal device(s) (seal membrane) as described and claimed herein.

Optionally, the stack of annular modules is toroidal. Optionally, the assembly may further comprise an elongate core module aligned with the longitudinal axis, a first end of the core module provided at and/or in part defining a first axial end of the chamber and/or the vessel and a second axial end of the core module provided at and/or defining a second axial end of the chamber and/or the vessel; optionally, wherein the assembly is configured such that the elongate core module is removable from the stack independently of the other modules. Optionally, the elongated core module is positioned at the longitudinal axis, a first end of the core module provided at and/or in part defining a first axial end of the chamber and/or the vessel and a second axial end of the core module provided at and/or defining a second axial end of the chamber and/or the vessel. Optionally, the annular modules comprise: at least one first end module provided in contact with the first end of the core module; at least one second end module provided in contact with the second end of the core module; and at least one intermediate module positioned axially intermediate of the first and second end modules. Optionally, the annular modules and the core modules define the chamber being a toroidal chamber. Optionally, the annular modules comprise a plurality of intermediate annular modules positioned axially between the first and second end modules. Optionally, the assembly comprises at least one axially upper module, at least one axially lower module and at least one criterial module positioned axially between the upper and lower modules. Optionally, the assembly comprises a plurality of equatorial modules stacked on top of one another axially between the upper and lower modules. Optionally, the upper module and/or the lower module is configured as a diverter to withstand extreme heat and contact and/or bombardment from particles exhausted from the plasma. Preferably, the first end module and/or the second end module is a diverter configured to extract heat and/or ash produced by the fusion reaction, to minimise plasma contamination and/or to protect regions or parts of the assembly from thermal and neutronic load.

As will be appreciated, the number of abutting annular modules may vary in different contexts, any suitable number of abutting annular modules may together from the vessel wall and it will be understood that the reference herein to any specific annular module amongst the first, second, third, fourth and fifth annular modules may be equally applicable to the annular modules of another modular vessel assembly comprising a different number of abutting annular modules.

According to a further aspect of the present concept there is provided a plasma confinement device, such as a tokamak comprising a modular vessel assembly as described and claimed herein, the plasma confinement device configured to maintain a magnetically confined plasma within the internal vacuum chamber of the modular vessel assembly; optionally, wherein the plasma confinement device comprises: one or more field coils for controlling the plasma, e.g. including one or more poloidal field coils and/or one or more toroidal field coils extending around the internal vacuum chamber; and/or a central solenoid aligned with the longitudinal axis.

Preferably, the stack defines at least one of: a first wall of the internal vacuum chamber; and at least one divertor configured to extract heat and/or fusion products from a fusion reaction. Preferably, at least one of the annular modules comprises one or more of: a breeder blanket arrangement, e.g. comprising a plurality of breeder blanket modules; one or more plasma facing components, e.g. a section of a first wall of the vacuum chamber; a cooling arrangement configured to supply and/or circulate a coolant for cooling at least part of the respective annular module, e.g. comprising a coolant manifold configured to supply coolant to or receive coolant from a plurality of cooling devices of the cooling arrangement; and one or more field coils for controlling the plasma.

According to a further aspect of the present concept there is provided a plasma confinement device configured to maintain a magnetically confined plasma within a vacuum chamber, the device comprising: a modular vessel assembly as described and claimed herein; a plurality of field coils, optionally including poloidal field coils and/or toroidal field coils extending around the chamber; and a central solenoid extending axially through the elongate core module. Preferably, the device comprises a plurality of poloidal field coils extending around the chamber a plurality of toroidal field coils extending around the chamber; a central solenoid extending axially through the elongate core module; wherein the modular vessel is configured to maintain a vacuum within the toroidal chamber and the field coils and the solenoid are configured to magnetically confine a plasma within the toroidal chamber.

Preferably, each of the annular modules further comprise dismantlable sub-modules, wherein the sub modules are removably mounted at each of the annular modules. Optionally, the sub modules may comprise any one or a combination of the set of: at least one shield, tile, blanket panel or breeder blanket provided at a radially inner region of the annular module; at least one electrical control coil, control coil power supply and/or control coil control system for generating, controlling, and/or delivering electrical power to magnetic coils; a coolant module and/or a manifold for supplying and/or circulating a coolant; a vacuum liner, sheet or layer, skin or housing. Such sub-modules are typically considered in-vessel components of a tokamak. Dividing the vessel and mounting the sub-modules independently at the separate and vertically stackable modules greatly simplifies installation and maintenance of a fusion power generating tokamak. In particular, the present concept is advantageous via integration of a vacuum boundary and structural function with the in-vessel components of the vessel/tokamak. The present vessel modules provide direct structural support for the in-vessel components (sub-modules) as noted including for example blankets, in-vessel coils, divertors, control magnets, cooling and service conduits and all associated connections, ports, pumps, electronic control etc.

Optionally, the modules define a first wall of the vacuum vessel wherein the first wall is the plasma-facing wall designed to withstand intense heat and particle bombardment. The fist wall is adapted to mount a blanket layer being a protective layer configured to withstand high thermal load and atomic bombardment by plasma particles, (energetic ions and neutrons).

According to a further aspect of the present invention there is provided a method of assembling a modular vessel assembly comprising A method of assembling a modular vessel assembly comprising: providing a plurality of annular modules; stacking the modules on top of one another along a longitudinal axis of the assembly such that the modules at least partially define an internal vacuum chamber; and sealing between the modules via a sealing arrangement to create a fluid seal configured to maintain at least a partial vacuum within the internal vacuum chamber, wherein a structural portion of each of the modules is configured to support a structural load transmitted at least axially through the stack of modules; optionally, wherein the method further comprises: translating a first module of the stack of modules along the longitudinal axis away from the remaining modules in the stack; undertaking maintenance, inspection and/or repair of the first module; and reforming the stack of modules via translating the first module or a replacement first module along the longitudinal axis to the remaining modules in the stack.

According to a further aspect of the present invention there is provided a method of assembling a modular vessel assembly comprising: providing a plurality of annular modules, each module having an inner face portion, an outer face portion, a first and second abutment portion extending axially between the inner and outer face portions; stacking the modules on top of one another about a central longitudinal axis of the modular vessel via abutment contact between the first and second abutment portions of the plurality of modules to define an internal vacuum chamber, a structural portion of each of the modules configured to support a structural load transmitted at least axially through the stack of modules; and sealing the modules together via a sealing arrangement extending at least axially between the modules to create a fluid seal at the stack configured to maintain a vacuum within the chamber. Optionally, the present modules may comprise a vacuum liner being different and/or additional to the sealing device (as described herein) wherein the vacuum liner comprises a respective axially upper and axially lower sealing surface region positioned at a respective axially upper and axially lower regions of each module. Such a sealing arrangement may facilitate creation and maintenance of a vacuum within the chamber.

Optionally, the present method of assembling a modular vessel further comprises removing a module from the plurality of modules at the stack via an axial displacement of one or more module; undertaking maintenance and/or repair of at least one a part, region or surface of the at least one module and/or a component (herein sub-module) provided or mounted at the module; and remounting the module removed from the stack via an axial displacement of the module. The present apparatus and method greatly facilities servicing, maintenance, repair and reassembly of the vacuum vessel and/or tokamak assembly.

According to a further aspect of the present concept there is provided a modular vessel assembly defining an internal chamber, the assembly comprising: a plurality of annular modules arranged as a stack and extending around a central axis to at least partially define an internal vacuum chamber; each of the modules having an inner face portion facing internally at the chamber, an outer face portion facing externally to the chamber and a first and second abutment portion in contact with the respective and opposite first and second abutment portions of axially neighbouring modules of the stack; each of the modules having a structural portion extending axially between the abutment portions and configured to support a structural load transmitted at least axially through the stack; and at least one sealing arrangement extending axially between the modules of the stack to create a fluid seal to maintain at least a partial vacuum within the chamber.

According to a further aspect of the present invention there is provided a modular vessel assembly defining an internal chamber, the assembly comprising: a plurality of annular modules extending around a central axis to at least partially define an internal chamber; each of the modules having a structural portion extending axially between respective abutment portions configured for abutment with axially neighbouring modules of the stack and configured to support a structural load transmitted at least axially through the modules arranged as a stack.

According to a further aspect of the present invention there is provided a modular plasma confinement vessel and/or device, such as a tokamak, to support a fusion reaction having an internal chamber, the vessel, device and/or tokamak comprising: a plurality of annular modules, the modules being mateable together to form a stack of modules, each module extending around a central axis to at least partially define a region of the internal chamber. Preferably, each of the modules is configured to be stackable in abutment contact with one another in a generally upright or vertical direction. As such, the abutment interface regions between each of the respective modules are orientated in a generally horizontal plane and/or a plane extending perpendicular or substantially perpendicular relative to the longitudinal axis of the vessel and/or the internal chamber.

### Brief description of the drawings

A specific implementation of the present invention will now be described, by way of example only, and with reference to the accompanying drawings in which:
Figure 1 is a cross-sectional view through a module vessel defining an internal chamber;
Figure 2 is a cross-sectional view of the modular vessel of figure 1 implemented as a plasma confinement device;
Figure 3 is a cross-sectional perspective view of the device of figure 2 in which the modular vessel is housed within an outer cryostat vessel;
Figure 4 is a plan cross-sectional view in a horizontal plane of a part of a plasma confinement device;
Figure 5 is a cross-section through A-A of figure 4 with selected components illustrated;
Figure 6 is a perspective view of the modular vessel part of figure 4;
Figure 7 is a plan view of part of the modular vessel part of figure 4;
Figure 8 is a perspective view of one of the modules of the confinement device of figure 4;
Figure 9a is a cross-sectional view of respective abutment regions of axially neighbouring modules of the vessel of figure 1 at region B;
Figure 9b is a cross-sectional side view of respective abutment regions of axially neighbouring modules of the vessel of figure 1 at a region circumferentially spaced from region B;
Figure 10 is a perspective view of the abutment regions of the modules of figure 9a and b;
Figure 11 is an exploded perspective view of the components of figure 10;
Figure 12 is a cross-sectional side view of a biased sealing arrangement of figures 9a to 11;
Figure 13 is a cross-sectional side view of a biased sealing arrangement of figures 9a to 11;
Figure 14 is a perspective view of a modular vessel;
Figure 15 is a cross-sectional perspective view of the vessel of figure 14;
Figure 16 is a cross-sectional side view of the vessel of figure 14;
Figure 17 is a perspective view of a modular vessel;
Figure 18 is a cross-sectional perspective view of the vessel of figure 17;
Figure 19 is a cross-sectional side view of the vessel of figure 17.

### Detailed description of preferred embodiment of the invention

The present concept provides a modular constructed confinement vessel in which the walls of the vessel define an internal chamber. The vessel is formed from individual modules (alternatively turned segments, annular rings, sections or parts). The vessel according to the present concept is suitable for implementation as a plasma confinement device or vessel and specifically a magnetic confinement vessel suitable to maintain a vacuum and a plasma created within vessel internal chamber. Specifically, the present concept is suitable for implementation as a tokamak or other fusion power confinement device including for example a stellarator or more generally a particle accelerator as will be appreciated.

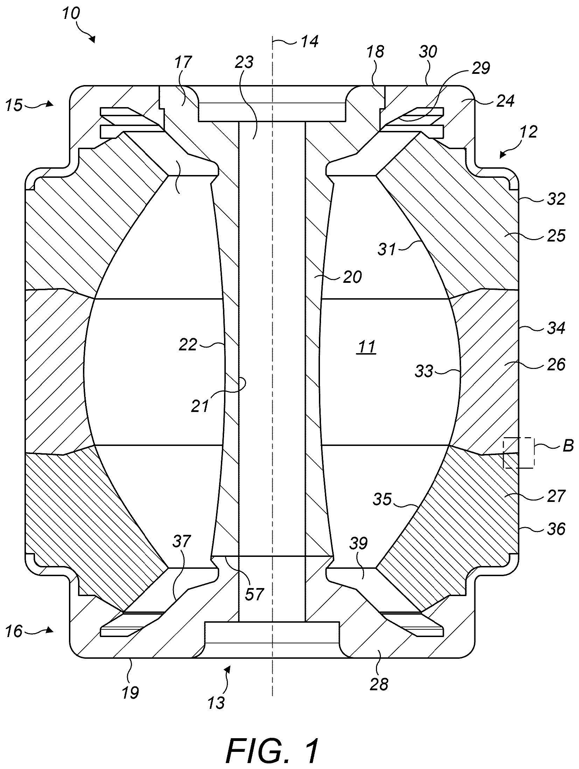

Referring to figure 1, the modular vessel assembly 10 comprises a vessel wall indicated generally by reference 12 defining an internal chamber 11. Vessel wall 12 is formed from a plurality of modules (at least some of which are annular) that extend in the circumferential direction around a central longitudinal axis 14 extending centrally through vessel 10 between a first vessel end 15 and a second vessel end 16. According to the present concept, vessel wall 12 comprises a first annular module 24 located at first end 15; a second annular module 25 abutting and extending axially from first module 24; a third annular module 26 abutting and extending axially from second module 25; a fourth annular module 27 abutting and extending from module 26; and a fifth annular module 28 abutting and extending from module 27 and positioned at vessel second end 16. Vessel 10 comprises a core indicated generally by ref 13, with core 13 extending axially between first module 24 and the fifth module 28. An external face 19 of fifth module 28 defines a first axial end of vessel 10 and an external face 18 of core 13 and an external face 30 of first module 24 defines a first axial end of vessel 10. Core 13 extends continuously between end faces 19 and 18, 30.

Internal chamber 11 is defined by respective inner face portions being the respective internal surface of each respective module, with such surfaces facing internally towards core 13 (and axis 14) and collectively represent an outboard side/surface of chamber 11. Internal chamber 11 is further defined by core surface 22 that defines an inboard side/surface of the chamber 11. In particular, first module 24 comprises internal face 29, second module comprises internal face 31, third module 26 comprises internal face 33; fourth module 27 comprises internal face 35; fifth module 28 comprises internal face 39.

Core 13 is formed by an elongate core module 20 having first axial end 17 and second axial end 38. First axial end 17 is configured to abut first annular module 24. Core module 20 comprises external face 22 positioned opposed to internal faces 31, 33 and 35 of the annular modules 25, 26 and 27. The respective inboard and outboard surfaces of chamber 11 define chamber 11 with a toroidal profile and configuration extending around axis 14. Each of the annular modules 24, 25, 26, 27, 28 comprise respective external faces 30, 32, 34, 36, 19 that define an external surface of vessel 10. The external surface of vessel 10 is further defined by external surface 18 of core module 20 at first vessel end 15. Internal chamber 11 is further defined by the internal face 37 of fifth module 28, internal face 29, first module 24 and a portion of inboard external face 22 of core module 20 at respective first and second vessel ends 15, 16.

According to a specific implementation, vessel 10 forms part of a magnetic plasma confinement device (suitable for use to support fusion reactions) where module 24 is configured as an upper divertor; second module 25 represents a top ring, third module 26 represents an equatorial ring; fourth module 27 represents a lower ring and fifth module 28 represents a lower divertor. Core module 20 may be referred to as an inboard build. Due to the modular construction of the vessel 10, advantageously each individual module or segment may be assembled and disassembled independently at the vessel 10 as and when required. Such a configuration is beneficial for servicing and maintenance of the various components the confinement device and avoids a requirement to dismantle large sections with corresponding extended downtime. According to the present concept, the modular construction simplifies installation and maintenance of such devices via the individual modules that may be stackable vertically to form the confinement vessel.

According to the specific implementation, each of the modules 20, 24, 25, 26, 27, 28 comprise a suitable structural integrity so as to provide structural support to both maintain operation and construction of the vessel and to support mounting of secondary or auxiliary components, assemblies, mechanisms etc., typically associated with magnetic plasma confinement devices including for example a shield-blanket assembly, service and coolant networks, control coils etc., as described herein and will be appreciated by those skilled in the art.

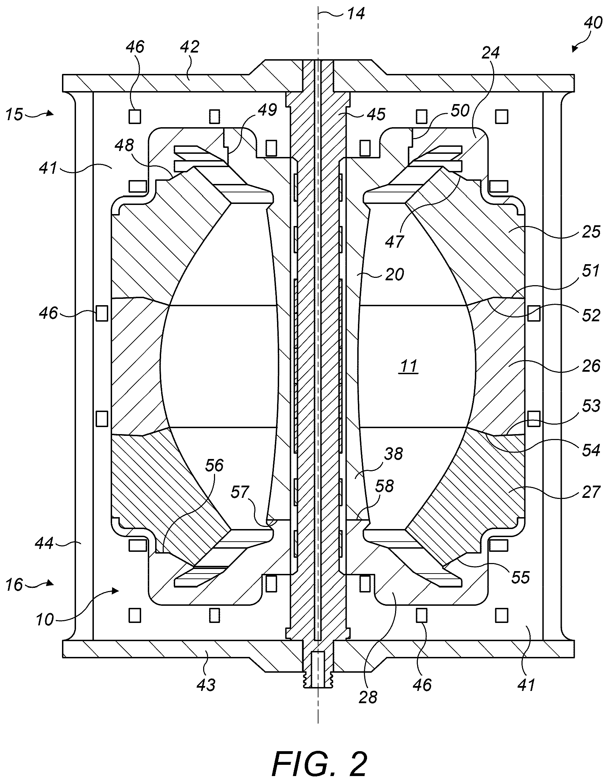

Referring to figure 2, each of the respective vessel (build) modules, 24, 25, 26, 27, 28 (and optionally 20) provide both a structural and vacuum seal function so as to maintain internal chamber 11 as a closed and sealed internal cavity suitable to support and maintain a vacuum (including a partial vacuum) typically associated with fusion reactor devices and processes. Accordingly, each of the structural (build) modules 24, 25, 26, 27, 28 and optionally 20 comprise respective structural portions extending between respective abutment portions and/or abutment faces. The respective structural portions are configured to be load bearing so as to withstand the loading forces transmitted axially (and also radially) through the modules as vessel 10 is constructed and maintained operational. In particular, first module 24 comprises abutment face 47 in contact with a corresponding abutment face 48 of second module 25. Module 25 further comprises a lower abutment face 52 in contact with an upper abutment face 51 of third module 26. Module 26 further comprises a lower abutment face 54 in abutment contact with an upper abutment face 53 of fourth module 27. Module 27 further comprises a lower abutment face 55 in contact with an abutment face 56 of fifth module 28. Fifth module 28 further comprises inboard abutment face 58 in contact with seal abutment face 57 of core module 20 towards second end 16. Core module 20 further comprises a corresponding abutment face 50 at or towards first end 15 and in contact with a further abutment face 49 of first module 24. Each of the respective modules and respective abutment faces comprise suitable structural integrity and strength so as to withstand the compressive loading forces of the entire vessel assembly in addition to all other components, assemblies and mechanisms associated with a plasma confinement device suitable for fusion reactions.

According to the specific implementation, each of the modules 20, 24, 25, 26, 27, 28 are formed from solid steel, a suitable metal and metal alloy composition compatible with plasma confinement and fusion reaction environments. Such material formulations are further configured to withstand bombardment by radioactive isotopes and to provide suitable shielding and confinement of the plasma and fusion reaction fuel and reaction products. Such materials may comprise stainless steel, nuclear-grade stainless steel, vanadium alloys, zirconium alloys, and ferritic/austenitic steels.

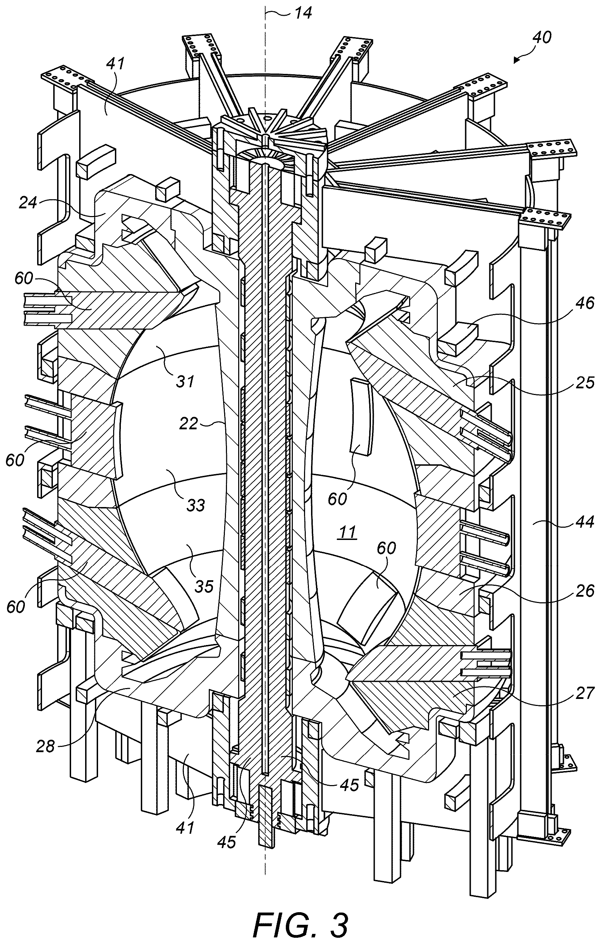

As illustrated in figure 2, vessel 10 is surrounded and encapsulated within a cryostat vessel indicated generally by ref 40. Cryostat vessel 40 and vacuum vessel 10 are further illustrated in figure 3. Referring to both figures 2 and 3, toroidal field coils comprises vertically extending members 44 extending parallel to axis 14 in a lengthwise direction of vessel 10 between respective first and second ends 15, 16. Members 44 are positioned at equally spaced distances in the circumferential direction around axis 14 and vessel 10. Each of the members 44 is supported by a respective inboard support 41 extending axially from a first upper axial end to a second lower axial end. Toroidal field coils comprise respective radially extending field members 42 (upper axial end) and 43 (lower axial end) with each radial member 42, 43 connected to a respective axial member 44. Cryostat vessel 40 comprises an axially upper roof section (not shown) and an axially lower base section (not shown) extending between a vessel wall, that collectively provide the cryostat vessel with structural confinement to enclose/house internally the vessel 10. Vessel 10 is supported by a set of support legs 44b extending upwardly from the ground or a suitable auxiliary support structure so as to mount vessel 10 in an upright position in use.

Core module 20 further comprises an internal face 21 (defining a central bore 23) an elongate solenoid 45 extends axially through bore 23 and is positionally secured at each external axial end of cryostat vessel 40 via mounting positions centred on axis 14. The assembly of vessels 10 and 40 (implemented as a plasma confinement device) further comprises a set of outer poloidal field coils 46 in addition to a corresponding set of outer toroidal field coils (42, 43, 44). Poloidal field coils 46 are annular magnetic coil rings arranged to extend in the circumferential direction around axis 14 and externally around modules 24, 25, 26 and 27. The toroidal field coils are looped magnetic coils that orbit the toroidal chamber at spaced apart internals circumferentially around axis 14 such that each coil loop passes over the external faces of the modules and axially through core 13 according to conventional fusion reactor devices. Solenoid 45 provides the corresponding third magnetic field flux to provide the required electromagnetic induction to drive the current in the plasma. As will be appreciated, the poloidal and toroidal field coils function to generate strong magnetic fields extending primarily around the toroidal vacuum chamber to confine and control the plasma at least positionally.

Referring to figure 3, vessel 10 and cryostat vessel 40 are adapted to accommodate and/or mount additional auxiliary components including limiters 60, blankets, ports (upper equatorial divertor), maintenance ports, shield panels, liquefiers, cooling coils, fluid circulation networks, drive components, actuators and other mechanical and fluidic components and assemblies as described herein and as will be appreciated by those skilled in the art familiar with magnetic plasma confinement devices. Reference herein to 'blankets or blanket panels' include breeder blankets and heat/radiation shielding. As will be appreciated, such panels and breeding/breeder blankets are configured to create tritium fuel from lithium to capture heat for electricity generation, and to shield various components such as the superconducting magnets and the vacuum vessel from high-energy neutrons.

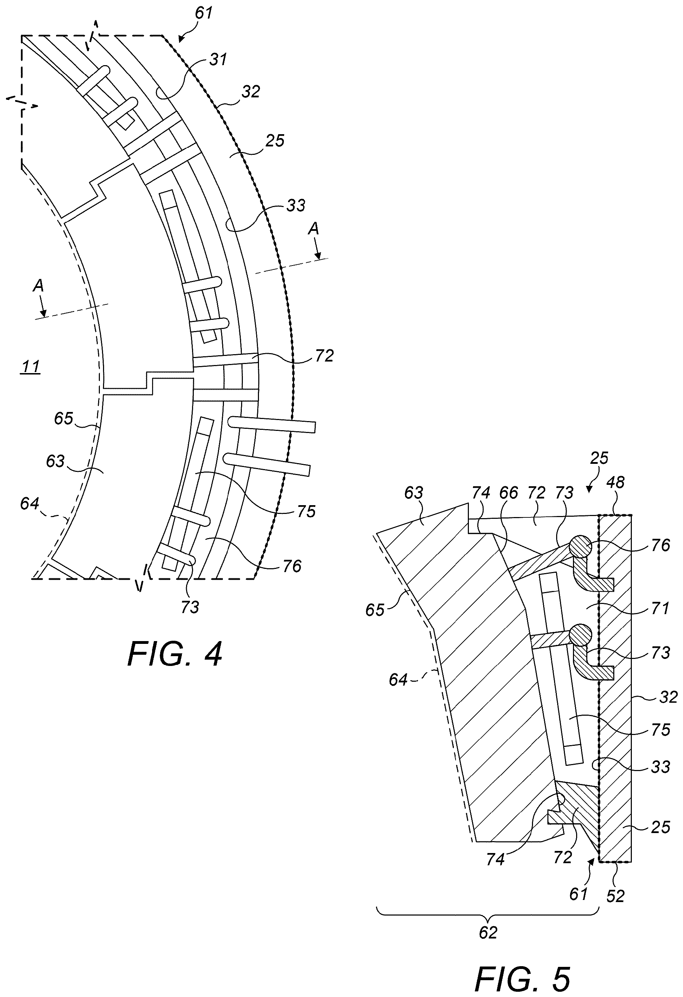

Referring to figure 4 and 5, a magnetic plasma confinement device according to the present concept is formed from the stacking of the annular (ring shaped) vessel modules (alternatively termed sections, segments, rings). Each of the modules 20, 24, 25, 26, 27, 28 are formed as solid singular components and are not themselves formed from separate components, segments or sections. In particular, upper, equatorial and lower modules 24, 26, 27 (extending axially between the axial end first and fifth modules 24, 28) are formed as annular rings extending 360 degrees as singular components around axis 14. At least some of the modules 25, 26 and 27 comprise a structural portion (solid metal or metal alloy construction as a single piece unit) to support the inboard and optionally outboard mounting of a selection of the components and/or assemblies used for magnetic plasma confinement and fusion reactions. The vessel 10 at module 25 is described below but the following configuration is equally applicable to all other vessel wall modules as described herein. Module 25 comprises an array of blanket supports 72 that extend radially from modular internal face 33 in a radial direction towards core module 20. Such supports 72 provide a mounting for individual blanket panels 63 (including shield blanket and breeder blanket panels and assemblies) that cover completely the internal surface of chamber 11 and function to protect the vessel modules (20, 24, 25, 26, 27, 28) the poloidal and toroidal field magnets, the central solenoid, the cryostat vessel 40 from the heat and high-energy neutrons produced by fusion reactions. As illustrated by way of example, modules 25 via their respective structural portion further support additional components including for example reactor control coils 75 and service/coolants conduits 73 that extend radially between module 25 and blanket panel 63 and provide fluidic communication with a circumferentially extending fluid circulation network 76. Such conduits and therefore the present modules include supply and return manifolds for supplying coolant and/or receiving coolant at the shield blankets and the wall of the vessel assembly/the Tokamak device.

Blanket panels 63 comprise an internal facing surface 65. A heat shield/liner 64 is mounted at surface 65 to provide further heat deflection at panel 63. Panel 63 further comprises a radially outward facing mount 74 (axially upper and lower positions) so as to detachably connect to the blanket supports 72 at axially upper and lower positions of each panel 63. A radially outward facing (rear) face 66 of panel 63 is positioned opposed to the internal facing surface 33 of module 25 to define an enclosure volume 71 at the respective faces 66 and 33. Additional components, assemblies, mechanisms, fluid circulation networks, coolant/servicing networks and components (not shown) may be incorporated within volume 71 and mounted to module 25 (and other modules of the stack/vessel) via suitable supports (not shown).

According to further embodiments, a liner (sheeting or skin) 61 (shown for illustrative purposes only in figures 4 and 5) may be provided at any one or a combination of module faces 33, 52, 48, 32 to at least partially enclose, cover or house the respective vessel module structural portions. Such a liner 61 may be utilised to enhance the structural and vacuum enclosure characteristics of the vessel modules such that when the vessel modules are mounted in abutment contact, the entire assembly is formed to some extent as a fluid tight enclosure having an internal chamber 11 suitable to support at least a partial vacuum. The collection/assembly of components 63, 72, 73, 76, 75 as described herein, represent a functional assembly 62 mounted at at least some of the vessel modules 24, 25, 26, 27, 28.

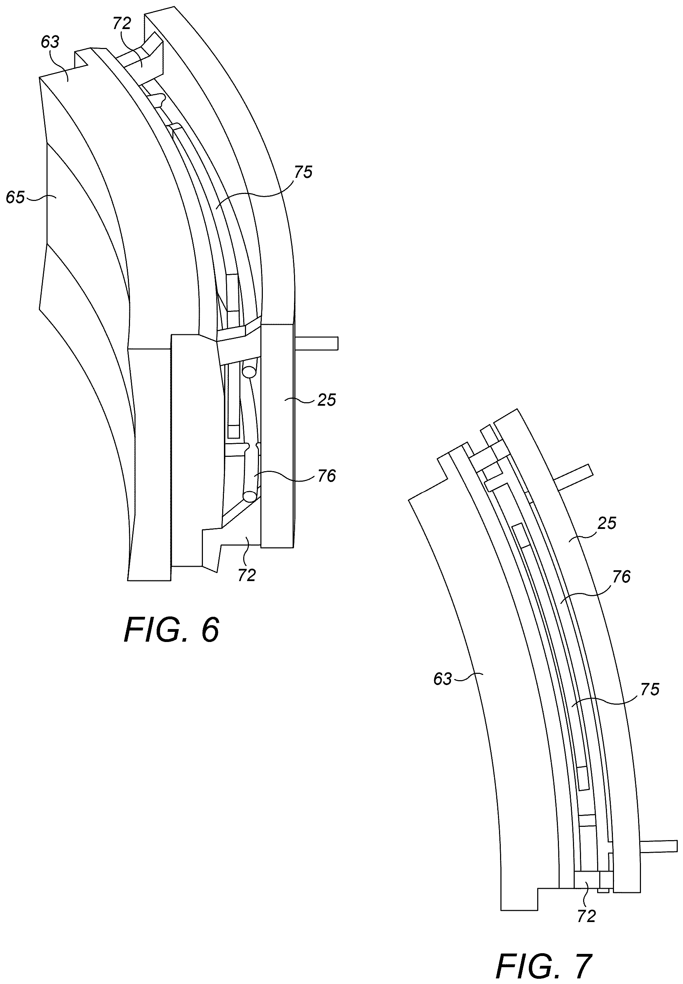

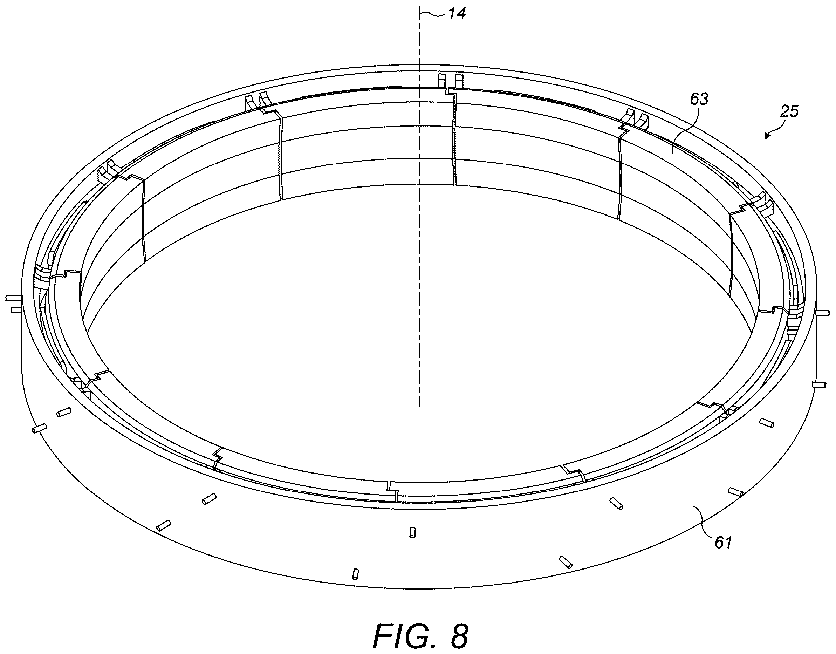

Figures 6 and 7 show angular segments of the outer vessel wall. It will be noted the wall modules are entirely annular and only a portion is shown in figures 6 and 7 for illustrative purposes. The annular 360° configuration of the modules (example module 25) is illustrated in figure 8 providing the corresponding structural support for the inboard shield blanket (panels 63) and additional components of the functional assembly 62.
Advantageously, vessel 10 being constructed from the annular modules, facilities servicing of the blanket panels 63 and other sub-modules, networks, assemblies and components.
The present modular construction allows fewer disconnections and reconnections of components e.g., fluid networks connections etc. The present stacked ring architecture is effective to enable maintenance and assembly work to be undertaken on specific sub-modules, components and parts of functional assembly 62 in addition to separate and remote maintenance, repair and servicing of the individual vessel modules 17, 24, 25, 26, 27, 28 and 20.

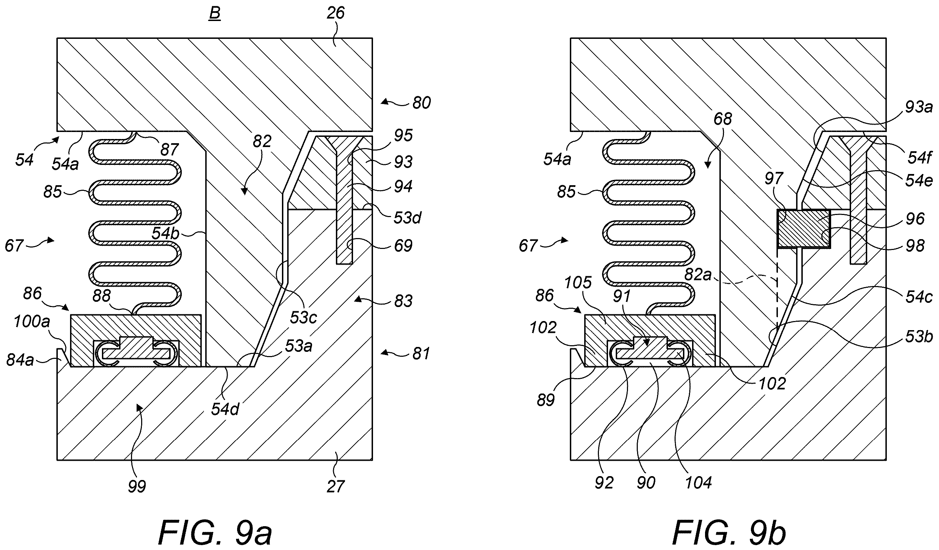

Figures 9a to 13 illustrate a sealing function of the vessel modules so as to provide a unitary vessel structure suitable to maintain a vacuum and/or a plasma within chamber 11.
According to the present concept, stackable modules 24, 25, 26, 27, 28 (and optionally 20) comprise individual and respective sealing devices illustrated generally by ref 67. Each device 67 is positioned at the module interface region, defined by respective abutment portions of each respective module 17, 24, 25, 26, 27, 28 and 20. By way of example, modules 26 and 27 comprise respective abutment portions 80, 81 (referring to figure 9a).
Such abutment portions turn comprise at least one and in particular a plurality of abutment surfaces configured for respective mating abutment contact with corresponding abutment surfaces of axially neighbouring modules of the vessel stack. Specifically, abutment portions 80, 81 are provided at respective axially upper and lower regions of each module of figure 9a where abutment portion 80 of equatorial module 26 is positioned in axially opposed abutment with the abutment portion 81 of axially lower annular module 27. The modules of vessel 10 including specifically the upper module 25, equatorial module 26 and lower module 27 comprise non-linear or non-planar abutment faces (48, 52, 51, 54, 53, 55, 56) with such surfaces being defined radially between the respective internal surfaces (29, 31, 33, 35, 39) and the respective radially external (outer) surfaces (30, 32, 34, 36, 19).
Such non-linear/non-planar interfaces are provided as each annular abutment portion of each module comprises an annular profiled configuration in the radial direction. Such a radially profiled configuration is defined for example by at least one annular step, at least one annular flange, at least one annular axial projection, annular castellations, at least one annular ridge, at least one annular angled, sloping or oblique section and interface (aligned non-perpendicular to central axis 14). These non-linear interface regions (as created by the respective abutment portions of the modules) are beneficial to manage and facilitate axial (and optionally radial) structural loading forces. Such a configuration is further advantageous to facilitate assembly and disassembly via axial and radial guidance and alignment that such non-linear flanges, steps etc., provide as the modules are stacked during assembly. These radially profiled (or radially non-linear) regions are further advantageous to enhance shielding by the vessel walls and in particular vessel modules from the internal heat and neutron emission generated within the vessel 11.

Referring to figures 9a to 11, abutment portion 80 of module 26 comprises an annular flange 82 (extending circumferentially around axis 14). Flange 82 is integral with module 26 and comprises an axial tip region having an end face 54d. Tip region of flange 82 is chamfered to comprise a first chamfered face 54c (at a first oblique angle relative to axis 14) and a second chamfered face 54e (at a second oblique angle relative to axis 14).

Abutment portion 80 further comprises abutment face 54f extending radially outside from flange 82 and a corresponding abutment face 54a extending radially inboard of flange 82 where the collective radial length of abutment faces 54a, 54d, 54c, 54e and 54f define the radially extending abutment face 54 of module 26. Abutment region 83 of module 27 is also non-linear at the interface region and comprises annular step portion. The step portion comprises a step base 99 and a step wall 83. Step wall 83 projects axially upward from step base 99 at a radially outer region of modular 27 and extends radially outside flange 82 in the circumferential direction around axis 14. An axial length of step wall 83 is less than an axial length of flange 82. Step wall 83 comprises a chamfered surface 53b, a step wall abutment surface 53c (extending coaxial or parallel to axis 14) and a capping abutment surface 53d (extending perpendicular to axis 14). Abutment face 53a extends radially between chamfered abutment face 53b and an annular lip 84a. Lip 84a is positioned at a radially inboard end of abutment portion 81 of module 27. Annular lip 84 comprises a chamfered face 100a extending at an oblique angle upwardly from face 53a. Accordingly, the corresponding radial combination of faces 100a, 53a, 53b, 53c and 53d define the complete abutment face 53 of lower module 27. An annular retainer ring 93 is mounted axially on top of step wall 83 in abutment contact with face 53d. Retainer ring 93 is secured to step wall 83 (and modular 27) via a series of retaining pins/screws 94 received within respective bores 95 (within retainer ring 96) and corresponding bores 69 (within step wall 83). Accordingly, Retainer ring 93 is removable mounted at module 27.

Referring to figure 9b, 10 and 11, the present concept further comprises at least one releasable locking assembly configured to releasably lock each of the plurality of vessel modules together in the stacked/assembled configuration. According to a specific implementation, the locking assembly is provided by a series of locking mechanisms provided respectively at the interface region between respective axial pairs of modules as defined by the respective abutment portions 80, 81. Specifically, the locking mechanism comprises respective a locking rings 96, with each ring 96 rotatably mounted within a respective circumferential extending channel defined between the opposed vessel modules, e.g., vessels 26 and 27. Specifically, the channel is defined by a recess 97 formed in the radially outer region of flange 82 and a corresponding recess 98 provided at a radially inner region of step wall 83. Each recess 97 is axially enlarged relative to an axial length, width or depth of each locking ring 96. This is advantageous to provide a degree of axial freedom/positional play as the modules are mated and/or locked together axially. With modules 26 and 27 aligned radially and in contact axially, recesses 97 and 98 align axially and radially to define the channel. Recess 97 at a lower edge or region, is castellated 82a or otherwise grooved.

Accordingly, by rotation of toothed ring 96 within the channel, the teeth of the ring 96 are displaced in the circumferential direction to align with the castellations 82a of flange 82 to actually lock the modules 26 and 27 together. Via continued or opposite displacement in the circumferential direction of toothed ring 96, ring teeth may be moved to clear the castellations 82a to allow the lower module 27 to be axially separated and disassembled from upper module 26. Rotational drive of the toothed ring 96 may be provided by a suitable mechanical (e.g., motor, actuator, rack and pinion), electro-mechanical or electronic drive (not shown) to drive circumferential movement of tooth ring 96. Referring to figure 9a and 9b, an annular cavity (or recess) 68 is created at the abutment interface between the modules 26 and 27 to accommodate the sealing device 67. Cavity 68 is defined, in part, by abutment face 54a, flange face 54b, abutment face 53a and at least part of annular lip chamfered face 100a. The sealing device 67 is accommodated entirely within the cavity 68.

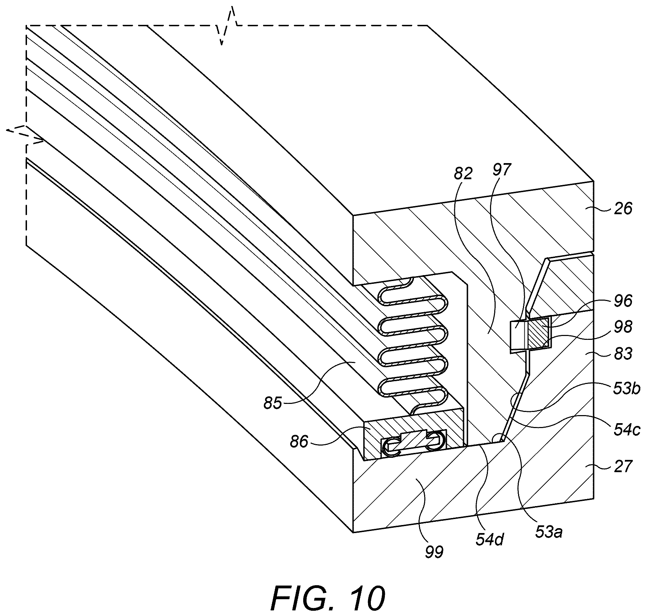

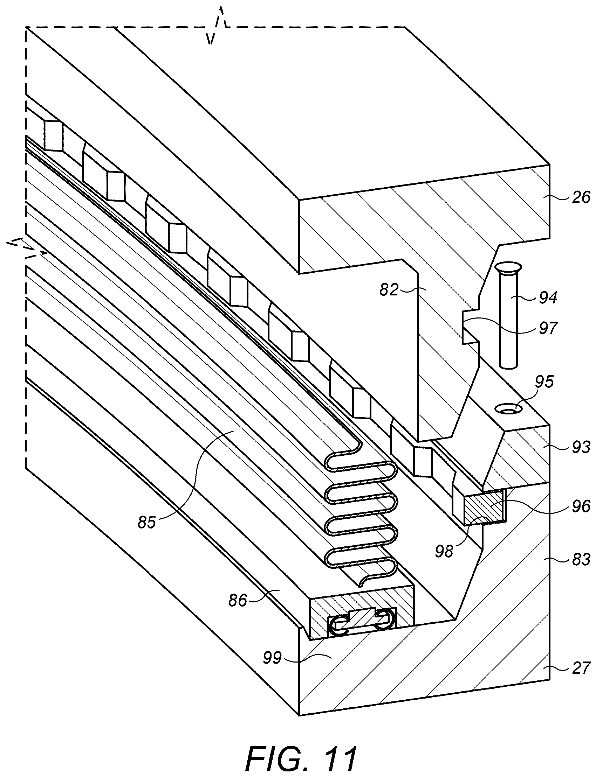

Device 67 comprises an annular and axially elongate member 85 configured and capable of flexing in an axial direction aligned with axis 14. Member 85 according to the specific implementation, is provided as a flexible annular bellows formed from a series of serpentine end sections extending between a first lengthwise end 87 and a second lengthwise end 88. End 87 is mounted at module 26 and is sealingly attached to abutment face 54a. The attachment end 87 at face 54a is configured to be fluid tight and may be provided by suitable attachment means (mechanical, chemical etc.). End 87 according to further implementations may be secured internally within module 26 at or proximate to abutment portion 80. Member second end 88 is attached to an annular seal shoe 86. Consistent with the attachment mechanism of end 87 (at face 54a), second end 88 is attached to seal shoe 86 via a fluid tight attachment. Member 85 and shoe 86 are annular (as illustrated in figures 10 and 11) and extend in the circumferential direction around axis 14 within cavity 68. Shoe 86 defines a load housing configured for abutting engagement against abutment surface 53a of modular 27 under the biassing force provided by flexible member 85. An annular cavity 90 is defined by respective portions of shoe 86 including specifically a body portion 105 (aligned and extending radially relative to axis 14) and a pair of spaced apart legs 102 extending axially from body portion 105. Respective axial annular end faces 89 of legs 102 are positioned immediately opposed at annular abutment face 53a (optionally in contact with face 53a). An annular T-shaped retainer boss 91 is housed within cavity 90. A pair of C-shaped annular load gaskets (alternatively termed gaskets) 92 are mounted at each lateral portion of the T-shaped boss 91. Load seals 92 are formed from a suitably resiliently compliant metal so to at least partially deform or deflect under transmission of axial load provided by the axial extension and biassing force of member 85 acting upon shoe 86. In particular shoe 86 forces boss 91 axially towards face 53a that in turn, forces axially the load seals 92 into compressed engaging contact with face 53a. This provides metal-to-metal fluid sealing contact between the respective abutment portions of the modules. That is sealing device 67 is provided at each respective abutment interface between axially neighbouring modules of the vessel 10, including modules 24, 25, 26, 27, 28 and 20. Such sealing devices 67 function cooperatively to provide a fluid tight seal to the unitary vessel structure. Such sealing is provided and maintained by the respective structural portions of the modules and in particular the mass/weight of the modules serving to provide the required loading forces that are transmitted axially between neighbouring modules. This in turn, provides the resilient compression in the axial direction through each respective member 85, in turn transmitting appropriate loading forces to the load seals 92.

Referring again to figures 9a to 11, lip chamfered face 100a and step portion chamfered face 53b (optionally in addition to retainer ring chamfered face 93a) function to guide positional alignment during the assembly of the vessel modules. Specifically, the corresponding chamfered face 54c and 54e provide corresponding abutment with the respective opposite chamfered faces to ensure correct radial alignment of the modules 26, 27 optionally in addition to appropriate axial alignment in the axial direction. Lip chamfered face 100a further provides radial alignment of shoe 86 within cavity 68 during assembly of vessel 10. Lip 84a further assists to maintain the radial and axial locating of shoe 86 in sealing engagement with the abutment face 53a in use. The load seals of the present concept including specifically the C-shaped load seals 92 comprise a suitable metal material, to provide high-performance sealing to maintain vacuum conditions.

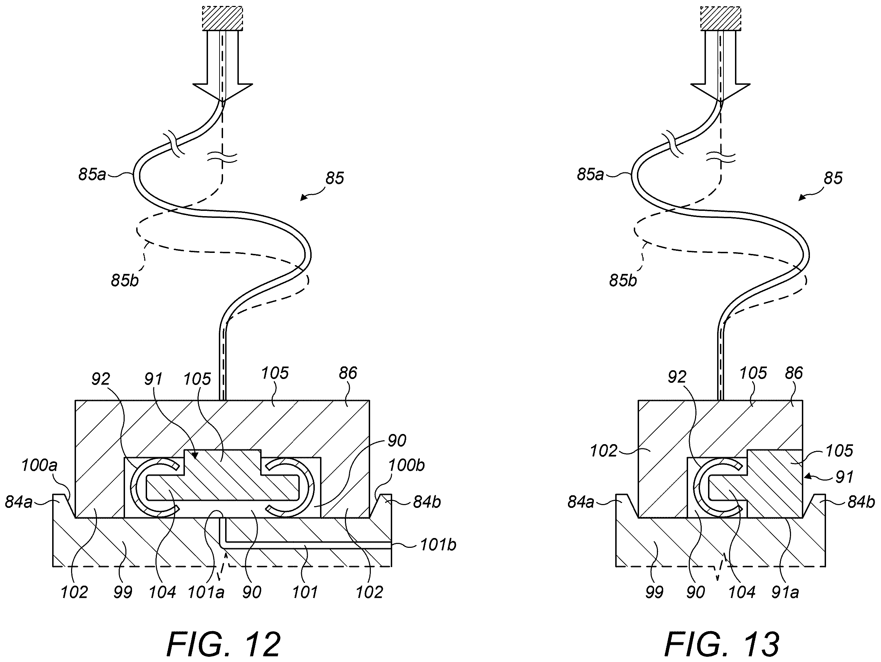

Referring to figures 12 and 13, further embodiments of the sealing device 67 are described. According to the further embodiment, a conduit (channel or bore) 101 extends internally within module 27 with an axial end 101a of channel 101 positioned at cavity 90. A vacuum pump or other suitable mechanism e.g., venturi valve (not shown) is attachable to channel 101 via channel terminal end 101b to at least partially evacuate cavity 90 and, in turn, enhances the secure fluid sealing between shoe 86 and abutment face 53a. Channel 101 and the corresponding evacuation device or assembly (not shown) is similarly compatible and forms an optional part of the primary embodiment described referring to figures 9a to 11. The further embodiment of figure 12 comprises an additional annular lip 84b having a corresponding chamfered face 100b. A radial separation distance between annular lips 84a and 84b is approximately equal to or slightly greater than a radial width of shoe 86 such that shoe 86 is accommodated between the annular lips 84a, 84b in close fitting radial alignment. Such an arrangement is beneficial to maintain the radial position of the sealing device 7. The respective abutment portions 80, 81 of the respective vessel modules may comprise additional annular ridges, ribs, lips etc. to further assist with the radial and axial positioning of the various components of the resilient member 85 and also seal shoe 86 and associated sub-components (boss 91and load seals 92).

Referring to figure 13, a further embodiment of the sealing device 67 comprises a different configuration of boss 91 and load seal 92. According to the further embodiment, seal shoe 86 is L-shaped and comprises body portion 105 and a single leg 102 in engaging contact with abutment face 53a. A lower abutment face 91a of boss 91 is also positioned in contact with face 53a and represents a second leg that is equivalent to leg 102 of shoe 86. Boss 91 comprises a singular annular lateral arm 104 around which is mounted a single C-shaped load seal 92 corresponding to the shape and function of the load seal 92 of the embodiment of figures 9a to 11 and 12.

Referring to all embodiments 9a to 13, resilient member 85 is configured to flex in the axial direction (of axis 14). When unloaded, an axial length between member first end 87 and the annular abutment faces 89 of shoe 86 is greater than the axial length of flange 82. As the modules 26 and 27 are drawn together axially during assembly, member 85 is compressed axially from the axially extended configuration represented by ref 85a to the axially compressed configuration indicated by ref 85b (figures 12 and 13). Such configuration and function is the same for all embodiments 9a to 13. According to further embodiments, member 85 may be formed from a plurality of resilient members that may be positioned axially or radially relative to one another. According to further embodiments, member 85 may comprise singular respective components or may be formed from multiple sections or sub-modules to provide composite resilient members. Such configurations may be provided to ensure uniform and/or different magnitudes of compressive force delivered to the load seals 92 as desired.

During the final stage of the assembly of the annular modules, and referring to figures 9a to 11, module 26 is lowered onto module 27. Due to the flexible elongate extension of member 85, seal shoe 86 (and in particular C-shaped gaskets 92) initially contacts abutment face 53a. As module 26 is continually lowered onto module 27, member 85 compresses axially. Over compression of the sealing device 67 is prevented by a *'bottoming'* of flange 82 and in particular, abutment contact between end face 54d and abutment face 53a. Once contact is made between faces 54d and 53a, the resiliently biased retainer ring 96 is received within recess 97 (at flange 82) to axially lock modules 26 and 27. Recess 97 is oversized in the axial direction relative to an axial length of ring 96 so as to provide a relatively small degree of axial play. The degree of play is sufficient to allow a small gap to be created between opposed faces 54d and 53a. This oversizing of recess 97 relative to ring 96 facilitates both axial mating of the modules 26 and 27. This also ensures the stacked modules 26, 27 etc are appropriately abutted against one another and there is at least some positional play within the assembly process to avoid misalignment and over compression of the sealing device 67 in sealing contact against abutment face 53a. Sealing device 67 is configured via the flexible resiliently biased member 85 and sealing shoe 86 to ensure a fluid seal is maintained notwithstanding any small gaps between the modules 26 and 27. As described, this avoids misaligned axial loading forces through the assembled stack. Chamfered surfaces 100a, 53b, 54c, 93a, 54e etc as described herein at the region of the abutment and contact faces 53a, 54d are advantageous to constrain excessive radial motion of the various component parts as the modules are mated together. Resiliently compressive member 85 and the chamfered surfaces described herein, ensure a reliable fluid seal is created not withstanding any small local misalignment of the seal shoe 86 at base step 99. Sealing device 67 is configured so as to provide and maintain the fluid seal notwithstanding and small axial gaps within the assembly. Additionally, sealing device 67 via its annular resiliently compressible configuration, is configured to accommodate any non-planar alignment of respective contact surfaces between axially upper and lower modules as they are mated together. Such a configuration is provided, in part, by the dimensions of annular recess 97 that is axially longer/oversized relative to axial length of ring 96. Accordingly, the present module assembly is configured to ensure a desired compressive loading force is transmitted through the individual modules and/or each sealing device.

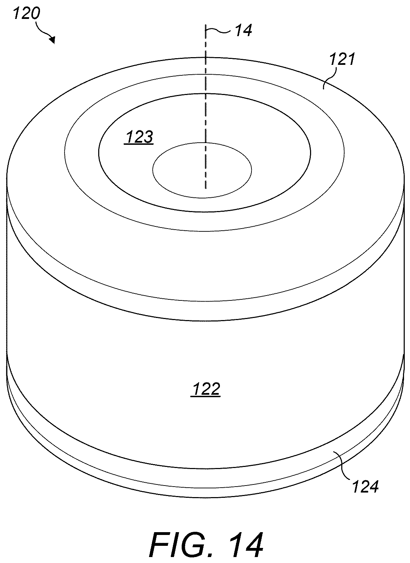

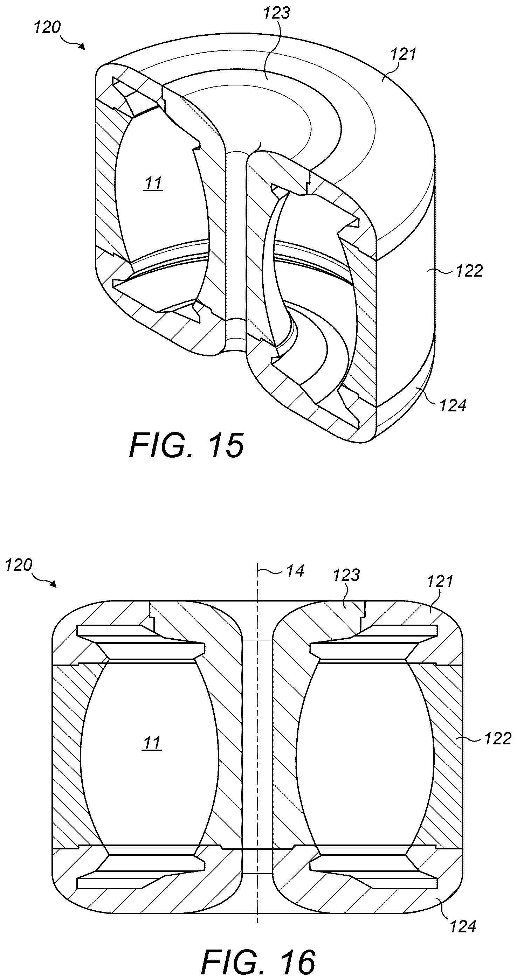

A further embodiment of the present concept is illustrated in figure 14 to 16 in which vessel 120 comprises a first axial end module 121 centred on axis 14, a central core module 123, a single equatorial annular ring module 122 and a corresponding axially lower end module 124. The modular assembly of vessel 120 defines internal chamber 11.

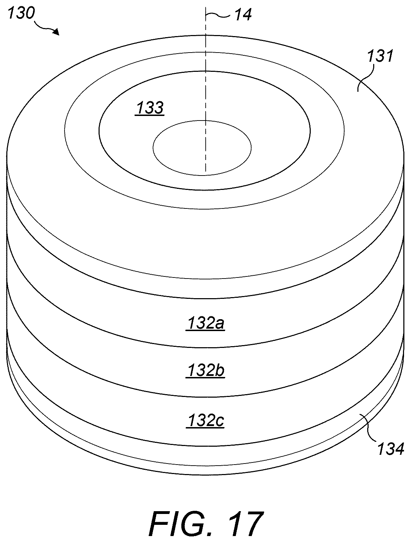

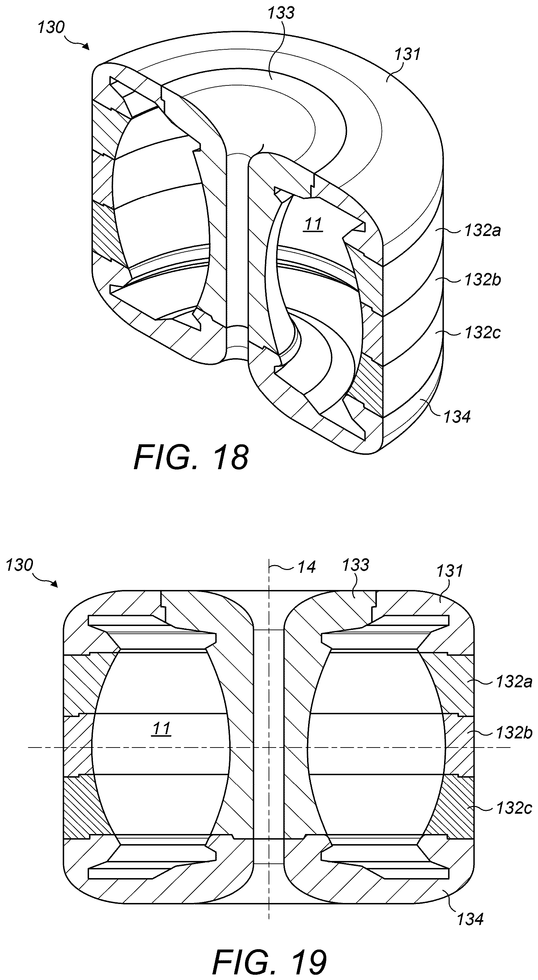

A further embodiment of the present concept is illustrated in figure 17 to 19 in which vessel 130 comprises a first axial end module 131 centred on axis 14, a central core module 133, a multi-component/assembly equatorial annular module and a corresponding axially lower end module 134. The multi-component equatorial module comprises three modular rings including an upper ring 132a, an intermediate ring 132b and a lower ring 132c, wherein rings 132a to 132c are positioned axially between end modules 131 and 134.

The construction and function of the modules described referring to the embodiments of figures 14 to 19 correspond to the construction and function of the embodiment described referring to figures 1 to 11 (and further embodiments of figures 12 and 13). Such sealing devices and additional assemblies 62 are omitted for illustrative purposes.

According to yet further implementations, the vessel 10, 120, 130 may comprise outer wall modules only and no inner core module (20, 123, 133). According to such configurations, the vessel comprises an internal chamber 11 that is not toroidal and is defined exclusively by an internal facing surface corresponding to a radially inner surface of the outer wall modules. Such further embodiments may comprise any number and specific configuration of annular modules configured to be arranged in a stack and in axial abutment with one another centred about axis 14.

Although the invention has been described as above with reference to one or more preferred embodiments, it will be appreciated that various changes or modifications may be made without departing from the scope of the invention as defined in the claims.

## Claims

1. A modular vessel assembly comprising:
a stack of annular modules stacked along a longitudinal axis of the assembly so as to at least partially define an internal vacuum chamber; and
a sealing arrangement configured to create a fluid seal between the annular modules for maintaining at least a partial vacuum within the internal vacuum chamber,
wherein each annular module comprises a structural portion configured to support a structural load transmitted axially through the stack.

2. The assembly as claimed in claim 1 wherein the sealing arrangement comprises one or more sealing devices mounted respectively to the modules and configured to extend between axially neighbouring modules of the stack.

3. The assembly as claimed in claim 2 wherein each sealing device is mounted at the structural portion of a respective one of the modules and is configured to contact the structural portion of a respective axially neighbouring module of the stack,
optionally, wherein each sealing device comprises:
a biasing member having a first end region sealingly connected to the module to which the sealing device is mounted and a second end region; and
a sealing shoe sealingly connected at the second end region of the biasing member;
wherein the sealing shoe is provided in sealing engagement with the respective axially neighbouring module of the stack, the biasing member configured to apply a biasing force to the sealing shoe to bias the sealing shoe into contact to provide a fluid seal between the modules of the stack.

4. The assembly as claimed in any preceding claim, wherein each annular module comprises an annular abutment portion in contact with a respective adjacent annular abutment portion of an axially neighbouring annular module of the stack, wherein the structural portions of the modules are configured to transmit the structural load between the respective abutment portions of the modules.

5. The assembly as claimed in claim 4, wherein the abutment portions of at least one pair of axially neighbouring modules comprise a first annular extension provided on one of the pair of modules, and a second annular extension provided on the other of the pair of modules, wherein the first and second annular extensions are radially offset relative to each other so as to axially overlap; optionally, wherein at least one of the first and second annular extensions comprises one or a combination of: an annular step; an annular flange; an annular ridge; and at least one castellation, e.g. wherein the first annular extension comprises an annular step and the second annular extension comprises an annular flange positioned radially inboard of an axially extending wall portion of the annular step of the first annular extension such that the respective annular flange and the annular wall portion of axially neighbouring modules of the stack axially overlap.

6. The assembly as claimed in claims 4 or 5, wherein the annular extensions of at least one pair of axially neighbouring modules comprise corresponding chamfered surfaces aligned oblique to the longitudinal axis and arranged so as to contact one another to aid alignment of the modules as they are assembled axially to form the stack.

7. The assembly as claimed in any preceding claim further comprising a locking mechanism configured to selectively lock axially neighbouring pairs of annular modules of the stack together.

8. The assembly as claimed in claim 7, wherein the locking mechanism comprises a first part provided at one module of the pair of modules, and a second part provided at the other module of the pair of modules, the first and second parts configured for releasable engagement with each other to provide the axial lock; optionally, wherein the first and second parts comprise respective first and second recesses and the locking mechanism further comprises an annular toothed ring mounted at least partially within a cavity defined by the first and second recesses, the toothed ring capable of rotation in a circumferential direction around the longitudinal axis within the cavity; optionally, wherein the assembly further comprises a drive mechanism coupled to the toothed ring to provide rotational drive to the ring.

9. The assembly as claimed in any preceding claim, wherein the stack of annular modules is toroidal.

10. The assembly as claimed in claim 9 further comprising an elongate core module aligned with the longitudinal axis, a first end of the core module provided at and/or in part defining a first axial end of the chamber and/or the vessel and a second axial end of the core module provided at and/or defining a second axial end of the chamber and/or the vessel; optionally, wherein the assembly is configured such that the elongate core module is removable from the stack independently of the other modules.

11. The assembly as claimed in claim 10 wherein the stack comprises:
at least one first end module provided in contact with the first end of the core module;
at least one second end module provided in contact with the second end of the core module; and
at least one intermediate module positioned axially intermediate of the first and second end modules; and
optionally wherein the annular modules comprise a plurality of intermediate annular modules positioned axially between the first and second end modules.

12. A plasma confinement device, such as a tokamak, comprising a modular vessel assembly as claimed in any one of claims 9 to 11, the plasma confinement device configured to maintain a magnetically confined plasma within the internal vacuum chamber of the modular vessel assembly; optionally, wherein the plasma confinement device comprises: one or more field coils for controlling the plasma, e.g. including one or more poloidal field coils and/or one or more toroidal field coils extending around the internal vacuum chamber; and/or a central solenoid aligned with the longitudinal axis.

13. The plasma confinement device as claimed in claim 12, wherein the stack defines at least one of:
a first wall of the internal vacuum chamber; and
at least one divertor configured to extract heat and/or fusion products from a fusion reaction.

14. The plasma confinement device as claimed in claims 12 or 13 wherein at least one of the annular modules comprises one or more of:
a breeder blanket arrangement, e.g. comprising a plurality of breeder blanket modules;
one or more plasma facing components, e.g. a section of a first wall of the vacuum chamber;
a cooling arrangement configured to supply and/or circulate a coolant for cooling at least part of the respective annular module, e.g. comprising a coolant manifold configured to supply coolant to or receive coolant from a plurality of cooling devices of the cooling arrangement; and
one or more field coils for controlling the plasma.

15. A method of assembling a modular vessel assembly comprising:
providing a plurality of annular modules;
stacking the modules on top of one another along a longitudinal axis of the assembly such that the modules at least partially define an internal vacuum chamber; and
sealing between the modules via a sealing arrangement to create a fluid seal configured to maintain at least a partial vacuum within the internal vacuum chamber,
wherein a structural portion of each of the modules is configured to support a structural load transmitted at least axially through the stack of modules;
optionally, wherein the method further comprises:
translating a first module of the stack of modules along the longitudinal axis away from the remaining modules in the stack;
undertaking maintenance, inspection and/or repair of the first module; and
reforming the stack of modules via translating the first module or a replacement first module along the longitudinal axis to the remaining modules in the stack.
